# EUROPEAN PATENT SPECIFICATION

(11) **EP 3 454 668 B1**
(45) Date of publication and mention of the grant of the patent: **07.09.2022**
(21) Application number: 16901257.2
(22) Date of filing: 11.05.2016
(51) Int. Cl.: A23L 3/00, A23P 10/25

(54) **PROCESS FOR MAKING FOOD GRANULES**
VERFAHREN ZUR HERSTELLUNG VON LEBENSMITTELGRANULAT
PROCÉDÉ DE FABRICATION DE GRANULÉS ALIMENTAIRES

(43) Date of publication of application: 20.03.2019
(73) Proprietor: Société des Produits Nestlé S.A., 1800 Vevey (CH)
(72) Inventor: TANG, Tianyue, Shanghai 201101 (CN); JIN, Wei, Zhangjiagang Jiangsu 215634 (CN); ZHU, Shenglin, Shanghai 201615 (CN); GUO, Yuxuan, Shanghai 201104 (CN)
(74) Representative: Dinger, Hansjörg
(86) International application number: PCT/CN2016/081688
(87) International publication number: WO 2017/193302

(56) References cited:
- EP-A1- 1 074 188
- WO-A1-2008/086918
- WO-A1-2011/069885
- WO-A1-2011/069885
- WO-A2-02/05667
- CN-A- 101 374 427
- CN-A- 101 594 787
- CN-A- 103 404 823
- CN-A- 103 859 348
- GB-A- 1 429 638
- US-A- 3 987 207
- US-A- 4 797 292

## Description

The present invention relates to a process for making food granules, where the granules comprise a lipid, salt, starch, a hygroscopic food material and dry spices.

Granulation has been used in the food industry for a long time to produce agglomerates with improved dispensability when compared to fine powders. The known use of water as agglomerating agent for granulation generally is limited to the agglomeration of water soluble particles which after having been wetted stick together forming liquid bridges. During drying the liquid bridges are transformed into stable solid bridges which hold together the fine food ingredients and particles which constitute the matter of the food granules.

For example GB 1,112,553 discloses such a process for producing granules which comprises crystalloid material obtained via crystallization from a hydrolyzed dextrose solution.

EP 1'074'188 A1 discloses a free flowing granulated food product comprising a swelling powdered food material with granules having a relatively big mean diameter particle size of 600 to 1200 µm. A process for producing these granules is disclosed as well, and where agglomeration of the powdered material is in a fluidized bed in order to obtain the granular food product. Fluidization of a premix comprising 2-10 wt% of a melting fat and 78-92 wt% of filler is done with an ascending current of air having a temperature from 80 to 120°C and with using 2-8 wt% of a binding agent. The binding agent was gum arabic. The disclosed food granules have an improved wettability when compared to smaller granules which were agglomerated in a fluidized bed system at a lower temperature profile.

Albeit producing better soluble food granules, the process disclosed in EP 1'074'188 A1 has the disadvantage that heating flavor compositions used as part of the filler to 80°C or more results in a continuous loss of important volatile flavor compounds. Furthermore, today's consumers start to shy away from food products which contain added hydrocolloids and food gums.

EP 1'074'188 A1 further mentions that when processing hygroscopic food powders with using water as a spraying agent often a de-fluidization of material due to over-wetting can be observed.

WO2008/058602 A1 discloses a method for producing a granular food product containing 1-20 wt% oil or fat, where the powdery ingredients are mixed with water and then cold extruded into granules, which were dried thereafter. The document does not disclose the presence and use of a hygroscopic food material for incorporation into the granular food product.

WO2011/069885 A1 discloses a granular savoury food concentrate which comprises 10-65 wt% salt, 1-20 wt% yeast extract and from 10-50 wt% flour, starch or a mixture thereof. For producing the granular food concentrate, the salt and flour/starch mixture was wetted with water, yeast extract was added simultaneously or thereafter, and the wet mass was then wet-extracted into granules at a cold or warm temperature. The document describes that this wet-granulation can be achieved by pressing the wet mass through a sieve and thereby forming granules. Such wet-granulation can be achieved by shear granulators, high speed mixer granulators, extruders or fluidized bed granulators.

US-3987207 discloses wet-granulated quick dissolving granules comprising fat coated dry potage ingredients.

WO2011/069885 A1 further discloses that relatively high amounts of yeast extract in the granulation mixture result in a blockage of the granulation machinery because of a very high resistance. For this reason, the content of yeast extract in conventional granulation mixtures has been typically limited to less than 1 wt%. WO2011/069885 A1 solves this problem by adding the yeast extract to the granulation mixture during or after the mixing with water.

The present inventors have further identified that cold wet-granulation according to prior art technology is not only very difficult or impossible to achieve when high amounts of yeast extract are present in the granulation mixture, but that such granulation is even more difficult or impossible when yeast extract (or other hygroscopic materials) is co-present with higher amounts of dried spices such as e.g. dry spice powders. Hence, there is a persisting need in the art and the food industry to find better solutions and/or alternative solutions to granulate food materials comprising hygroscopic food material.

### Summary of the invention

The object of the present invention is to improve the state of the art and to provide an improved or alternative solution to the industry to overcome at least some of the inconveniences described above.

The object of the present invention is to find better solutions and/or alternative solutions to granulate food materials comprising hygroscopic food material.

Particularly, the object of the present invention is also to find better solutions and/or alternative solutions to granulate food materials where the food material further comprises dry spices in combination with a hygroscopic food material.

The object of the present invention is achieved by the subject matter of the independent claims. The dependent claims further develop the idea of the present invention.

Accordingly, the present invention provides in a first aspect a process for making food granules comprising a lipid, salt, starch, a hygroscopic food material and optionally dry spices, the process comprising the steps of:
a) coating the hygroscopic food material with the lipid or part of the lipid;
b) mixing the coated hygroscopic food material with the salt, the starch and optionally the dry spices;
c) adjusting the moisture content of the mixture of step b) to a water content of 7 - 13 wt% (wet weight) by adding water and/or an aqueous composition to result in a wet mass;
d) cold extruding at a temperature below 35°C the wet mass through a sieve into granules;
e) drying the granules to a moisture content of 1 - 7 wt% (wet weight).

In a second aspect, the invention relates to food granules which are obtainable by the process of the present invention. It has been surprisingly found by the inventors that when hygroscopic food material is first coated with fat and/or oil before the addition of other food ingredients such as salt, starches and optionally dry spices, and wetted thereafter with water or an aqueous wet composition, this wet-food mass can be much better extruded in a standard wet-granulation equipment at room temperature. Yield of extrusion is much better and the risk of blocking the granulation equipment is much less. Evidence for this is provided in the Examples section below. Hence, this invention provides a new solution to more efficiently cold and wet granulate food masses which comprise higher amounts of a hygroscopic material such as yeast extract or protein hydrolysates. Furthermore, this invention also provides a new technology to actually cold granulate wet masses which comprise higher amounts of a hygroscopic material and dried spices, such as for example higher amounts of a dry spice powder. This is particularly interesting because hygroscopic material and dry spices have a very different water affinity and wettability. So far it was not possible to cold extrude wetted masses comprising those two materials together.

Advantageously, the present invention now allows to more efficiently cold extrude a wet food mass which comprises a hygroscopic material and optionally dry spices. Prior art technology did not allow this or only with very limited and reduced efficiencies.

Furthermore, cold extrusion of food granules, and particularly of culinary food granules, is preferred over granulation or agglomeration technologies which are carried out at higher temperatures. This is because flavors and particularly volatile flavor compounds are much better preserved and contained with a process operating at cold or room temperature. Furthermore, granulation or agglomeration technologies with using a lot of hygroscopic material such as yeast extract or hydrolyzed protein compositions are rich in free amino acids and sugar molecules. There is an elevated risk that such compositions undergo chemical reactions, e.g. Maillard reactions, at higher temperatures which would significantly change the flavor profile and/or the color of such granulated products. This may not be desired. Consequently, cold wet-extrusion of food materials better preserves the natural aspect as to flavor, taste and color of its original ingredients in the final granules as when compared to hot extrusion technologies.

### Brief Description of the Drawings

Figure 1: Flow chart of the processes for Trial A and B
Figure 2: Granulation through-put results from Trial A and B

### Detailed Description of the invention

The present invention provides in a first aspect a process for making food granules comprising a lipid, salt, starch, a hygroscopic food material and optionally dry spices, the process comprising the steps of:
a) coating the hygroscopic food material with the lipid or part of the lipid;
b) mixing the coated hygroscopic food material with the salt, the starch and optionally the dry spices;
c) adjusting the moisture content of the mixture of step b) to a water content of 7 - 13 wt% (wet weight) by adding water and/or an aqueous composition to result in a wet mass;
d) cold extruding the wet mass through a sieve into granules;
e) drying the granules to a moisture content of 1 - 7 wt% (wet weight).

"Food granules" as of the present invention are mechanically stable, free flowing granules. The diameter size of the granules is usually between 0.4 and 5 mm. Preferably, the diameter size of the granules is between 0.7 and 4.0 mm, more preferably between 1.0 and 3.5 mm. The diameter is taken here as the longest diameter through the particle. The food granules have a good wettability and solubility for example in hot water.

"Mechanically stable" means that the food granules are sufficiently resistant to disintegration during normal filling and stocking procedures in packaging solutions, for example individual packs, and distribution of such packs in the commerce to individual consumers.

"Salt" refers herein to common salt or table salt, comprising NaCl.

"An aqueous composition" refers herein to a composition comprising water. Preferably, the composition is a wet food composition comprising water. For example the aqueous composition can be a vegetable or fruit puree, a vegetable or fruit juice, a fermentation supernatant, a liquid plant or meat extract, or a syrup.

"Cold extrusion through a sieve" can be achieved with using specific granulation equipment such as for example a wet sieve granulator, a rotor system granulator, or a basket granulator. The sieve can be a metal sieve, a plastic sieve, a net or a mesh. The mesh size of the sieve can range from Standard US mesh size 8 to ca. 40. "Cold" means that the extrusion is carried out at a temperature of below 35°C. Preferably, the extrusion temperature is between 5 and 30°C.

"Drying" refers herein to a process of reducing the final moisture content of the granules. This can be achieved for example by just exposing the granules to dry ambient, warm or hot air, by vacuum drying, by drying with a fluid bed dryer.

In one embodiment, the food granules comprise 5 to 25 dry wt% of the hygroscopic food material. Preferably, the food granules comprise 7 to 20 dry wt% of the hygroscopic food material, more preferably from 9 to 16 dry wt%.

In another embodiment, the food granules comprise dry spices. Preferably, the food granules comprise 1 to 25 dry wt% of the dry spices, more preferably from 2 to 15 dry wt% and even more preferably from 3.0 to 5, to 7, or to 10 wt% of the dry spices.

In a preferred embodiment, the food granules comprise the lipid in relation to the hygroscopic food material in a dry weight ratio of 1:2 to 1:4. The inventors found that this range was a good working range for efficiently coating the hygroscopic food material with the lipid.

The term 'lipid' of the present invention refers to an oil, a fat, or a combination thereof. Preferably, the lipid is solid at a temperature of 30°C or below. Further preferably, the lipid has a melting temperature of 45°C or above. In a preferred embodiment, the melting temperature of the lipid is in the range from 45°C to 70°C.

In one embodiment, the hygroscopic food material of the present invention pertains to a plant hydrolysate, a meat hydrolysate, a yeast extract, a vegetable powder, a meat powder, or a combination thereof. Preferably, the hygroscopic food material is yeast extract, hydrolyzed vegetable powder, soy protein hydrolysate, tomato powder, and/or onion powder.

The granules of the present invention comprise starch. Starch can be in the form of a purified natural or modified starch such as for example corn starch, potato starch, tapioca starch, pea starch, rice starch, or a combination thereof. Starch can also be in the form of flour, such as for example wheat flour, corn flour, rice flour, or a combination thereof. Starch can also be a combination of purified natural or modified starch and flour. Preferably, the starch is present in the food granules in an amount from 20 to 60 wt% (dry weight).

In a preferred embodiment, the food granules of the present invention comprise the starch in un-gelatinized form.

In one embodiment, the dry spices are added in step b) of the present process in the form of a powder. Preferably, the dry spices are selected from the group consisting of cumin, cinnamon, star anis, pepper, chili, turmeric, ginger, or a combination thereof.

In another embodiment, the step a) of the process of the present invention is carried out at a temperature of 35 to 85°C, preferably 45 to 70°C. At those temperatures, the lipid is liquid and thereby able to optimally coat the hygroscopic food material.

In a further embodiment, the steps b), c) and d) of the process of the present invention are carried out at a temperature of 5 to 30°C, preferably 15 to 25°C. At those temperatures, the lipid is preferably hardened again and thereby ensures that the hygroscopic food material well remains coated with the lipid during the processing of those steps. The coating of the hygroscopic food material during those steps helps to reduce the uptake of water by the said hygroscopic material and thereby preventing a total liquefication of this material. Water is then also better available during those steps which allows a better wetting of the remaining ingredients, particularly of the dry spices, while preserving the presence of the coated hygroscopic material. This appropriate wetting procedure of all the ingredients of the mixture mass then leads to a better efficiency and result when said wet mass is cold extruded through a sieve to obtain the food granules.

In step e) of the process of the present invention, the granules are dried to a moisture content of 1 to 7 wt% (wet weight). Preferably, the granules are dried to a moisture content of 2 to 6 wt% or 2.5 to 5.0 wt% (wet weight).

In one embodiment, the process of the present invention does not make use of a binding agent, wherein the binding agent is a food gum. Consequently, the food granules of the present invention do not comprise a binding agent which is a food gum. Preferably, the food gum not present in the food granules is selected from the group of agar-agar, alginate, carrageenan, cassia gum, cellulose gum, gellan gum, guar gum, konjac gum, locust bean gum, pectin gum, and xanthan gum. Today's consumers prefer more and more food products which are made with only natural food ingredients and do not contain any food additives. Therefore, the present invention provides now a new solution for making food granules which do not need anymore the use of a food additive binder such as a food gum. The resulting products are more natural, with less or no food additives, and consequently much preferred by most consumers today.

In a second aspect, the invention relates to food granules which are obtainable by the process of the present invention. Particularly, the food granules of the present invention can be a concentrated soup, a concentrated sauce, a seasoning, a food condiment, or a garnish.

Those skilled in the art will understand that they can freely combine all features of the present invention disclosed herein. In particular, features described for the process of the present invention may be combined with the product obtained by the process of the present invention and vice versa. Further, features described for different embodiments of the present invention may be combined.

Further advantages and features of the present invention are apparent from the figures and examples.

### Example 1

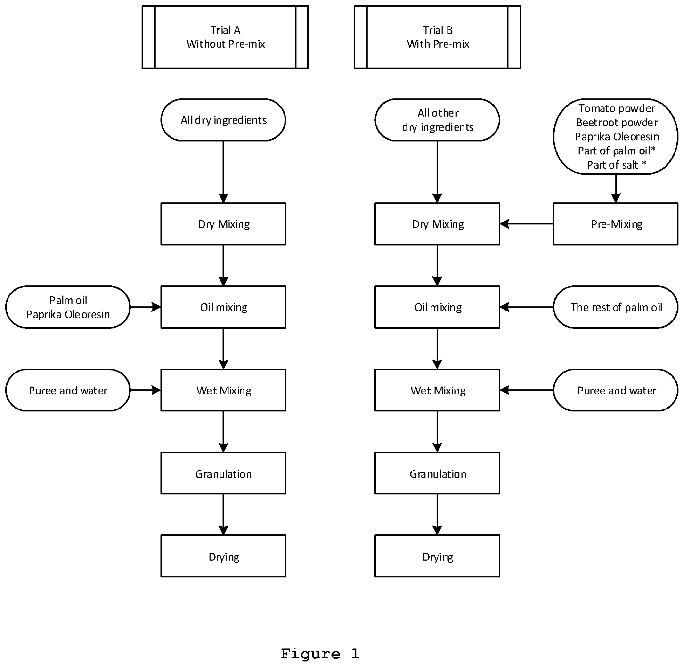

Two set of trials were set up with the same ingredients but different mixing sequence. The list of ingredients used is shown in Table 1. Figure 1 illustrates the flow chart of the processes used: Trial A, the 'standard' process of wet-granulation without a separate coating of the hygroscopic material (i.e. without pre-mixing); and Trial B, the process of the present invention with coating the hygroscopic material in the pre-mix.

**Table 1: List of ingredients**

| **Ingredients** | **Wt %** |
|---|---|
| Salt NaCl | 8.81 |
| Sugar | 15.56 |
| Citric Acid Anhydrous | 0.92 |
| Tomato + Beet root powder | 9.24 |
| Oil Palm | 5.06 |
| Color Paprika Oleoresin | 0.22 |
| Spices (pepper, cinnamon, cumin, anis powder) | 3.35 |
| Wheat flour | 2.22 |
| Corn Starch | 39.61 |
| Flavors | 1.27 |
| Full cream milk powder | 7.43 |
| Yeast Extract Powder | 0.38 |
| Vegetable Puree's | 5.93 |

### Trial A (without pre-mix):

1) Palm oil (melting point 33-39°C) was used in the trial. It was melted and hold at a temperature of 65°C;
2) Mix all the dry ingredients together in a plough share mixer:
   26.36 parts of crystal material (salt, sugar, citric acid, 1.07 part flavour enhancer), 3.35 part of spices (mix of pepper, cinnmamon, cumin and anis powder), 41.83 parts of starch/flour material and the other ingredients (flavors, full cream milk powder), 9.62 parts of hygroscopic material (tomato and beet root powder, yeast extract) with mixing for 3min;
3) Add this mix into the plough share mixer and mix for another 3min;
4) Inject 5.06 parts of palm oil and 0.22 part of paprika oleoresin slowly into the plough share mixer and mix for another 1.5min;
5) Add vegetable purees into the plough share mixer and mix for 3min;
6) Release the wet mass to a buffer tank;
7) Slowly add the wet mass to a twin-head granulator and extrude said wet mass through a sieve to produce granules;
8) The throughput of the granulator was recorded.

### Trial B (with pre-mix):

1) Palm oil (melting point 33-39°C) was used in the trial. It was first melted and the temperature of palm oil was 65°C.
2) 4 parts of salt, 9.24 parts of hygroscopic material (tomato and beet root powder) were premixed in a ribbon blender, and mixed for 2min;
3) 3 parts of palm oil and 0.22 part of paprika oleoresin were slowly added onto the top of the hygroscopic material, and mixed for 1.5min. This mixture is called a "pre-mix". After mixing it was cooled down to 30°C;
4) Mix all the other dry ingredients together in a plough share mixer: 22.36 parts of crystal material, 3.35 part of spices., 41.83 parts of starch/flour material, and other ingredients, and keep mixing for 3min;
5) Add the "pre-mix" into the plough share mixer and mix for another 3min;
6) Inject the rest of the palm oil into the plough share mixer, and mix for 1.5min;
7) Add the vegetable purees (into the plough share mixer, and mix for 3min;
8) Release the wet mass to a buffer tank;
9) Slowly add the wet mass to a twin-head granulator and extrude said wet mass through a sieve to produce granules;
10) The throughput of the granulator was recorded.

### Results and conclusions:

Although at the beginning, the throughput of both trials was very high (~650kg/h), this throughput dropped very quickly after a certain time for the trial sample where the wet mass was not pre-mixed (Trial A). The average throughput of Trial A was 406kg/h, while the average throughput of Trial B stayed elevated and was above 562kg/h.

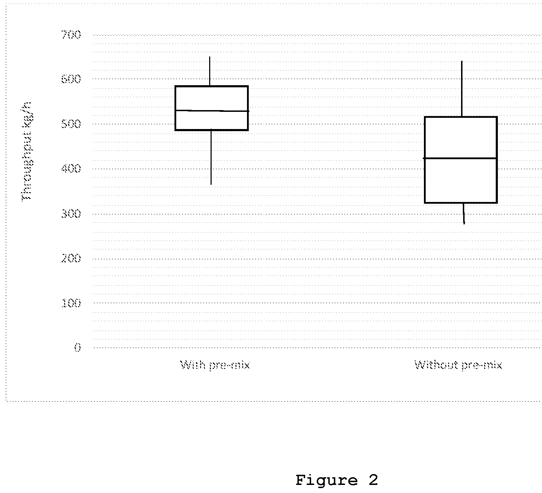

Legend to Figure 2:
1. *P value < 0.05 indicate that the throughput of these trials have a significant difference
2. Interquartile range box Middle 50% of the data
   - Top line Q3 (third quartile). 75% of the data are less than or equal to this value.
   - Middle line Q2 (median). 50% of the data are less than or equal to this value.
   - Bottom line Q1 (first quartile). 25% of the data are less than or equal to this value

It can be concluded that by changing the mixing sequence of the process with a same recipe, it was possible to reduce the hygro-capacity of the wet mass and thereby improve the granulation through-put through a same sieve.

### Example 2: Preparation of 14% tomato soup

20.82 kg tomato powder and 6 kg NaCl were added into a lodige mixer dry mixing for 3 mins.

Above mixture premixed with 6.12 kg oil for 1.5 mins, the oil should be firstly melt at the temperature between 60-70°C, here the ratio of oil:tomato is 1:3.4. This pre-mixing step is to protect moisture-sensitive ingredients tomato powder from moisture intake.

The pre-mix was further mixed with the further bulk ingredients, 7.2 kg NaCl, 23.3 kg sugar, 59.42 kg starch and 5.03 kg spice dry mixing for 3 mins.

Then add the residual 1.47 kg oil (melting at 65°C firstly) mixing for 1.5 mins.

Finally add 8.25 kg of freshly milled vegetable puree which premixed with 0.18 kg tomato powder. After that add water amount of 3.8 kg into the mixer wet mixing for 3-4 mins.

The moisture content of final wet mass was about 13.69%, then the mix was transferred to a twin head granulator for granulation.

During the granulation step a PET mesh was used for granulation, which has good properties of excellent wear resistance, low coefficient of friction.

Afterwards granules were dried with fluid bed dryer and moisture content of finished product is about 6.4%, and a yield of 74% was achieved.

### Example 3: Preparation of 15% tomato soup

22.32 kg tomato powder and 6 kg NaCl were added into a lodige mixer dry mixing for 3 mins.

Above mixture premixed with 6.56 kg oil for 1.5 mins, the oil should be firstly melt at the temperature between 60-70°C, here the ratio of oil:tomato is 1:3.4.

The pre-mix was further mixed with the further bulk ingredients, 7.2 kg NaCl, 23.3 kg sugar, 59.42 kg starch and 5.03 kg spice dry mixing for 3 mins.

Then add the residual 1.03 kg oil (melting at 65°C firstly) mixing for 1.5 mins.

Finally add 8.25 kg of freshly milled vegetable puree which premixed with 0.18 kg tomato powder. After that add water amount of 4.5 kg into the mixer wet mixing for 4 mins.

The moisture content of final wet mass was about 12.84%. Then the mix was transferred to a twin head granulator for granulation.

During the granulation step a PET mesh was used for granulation, which has good properties of excellent wear resistance, low coefficient of friction.

Afterwards granules were dried with fluid bed dryer and moisture content of finished product is about 5.6%, and a yield of 50% was achieved.

### Example 4: Preparation of 13% HVP soup

19.31 kg HVP powder and 6 kg NaCl were added into a lodige mixer for dry mixing for 3 mins.

Above mixture premixed with 5.68 kg oil for 1.5 mins, the oil should be firstly melt at the temperature between 60-70°C, here the ratio of oil:HVP (hydrolysed vegetable protein) is 1:3.4. This pre-mixing step is to protect moisture-sensitive ingredients HVP powder from moisture intake.

The pre-mix was further mixed with the further bulk ingredients, 7.2 kg NaCl, 59.42 kg starch and 5.03 kg spice dry mixing for 3 mins.

Then add the residual 1.91 kg oil (melting at 65°C firstly) mixing for 1.5 mins.

Finally add 8.25 kg of freshly milled vegetable puree which premixed with 0.18 kg HVP powder. After that add water amount of 0.2 kg into the mixer wet mixing for 3 mins.

The moisture content of final wet mass was about 10.8%. Then the mix was transferred to granulator for granulation.

During the granulation step a PET mesh was used for granulation, which has good properties of excellent wear resistance, low coefficient of friction.

Afterwards granules were dried with fluid bed dryer and moisture content of finished product is about 3.85%, and a yield of 74.5% was achieved.

The results of Examples 2-4 are summarized in Table 2.

**Table 2.**

| EXP | Tomato powder | HVP | moisture wet mass | moisture finished granules | Production yield | Result |
|---|---|---|---|---|---|---|
| 2 | 14% | 0 | 13.69% | 6.40% | 74% | Good granulation |
| 3 | 15% | 0 | 12.84% | 5.60% | 50% | Acceptable granulation |
| 4 | 0 | 13% | 10.80% | 3.85% | 74.5% | Good granulation |

Oil content (5.06%), starch content (39.6%), salt and sugar content (24.4%) and spices content (3.35%) was identical for all three examples.

### Comparative Examples to Examples 2 and 3 without pre-mixing

### and coating of the tomato powder:

It was not possible to produce any meaningful amounts of granules with the recipes of Example 2 and 3 in a process where the tomato powder was not coated with the fat in the pre-mix. The production yield in both cases was much below 50%. In fact, in both cases the ingredient mixture lumped in the granulator and blocked the apparatus. The Nylon mesh used in those granulators broke in all instances soon after start of the production. No production yields could be established.

### Example 5: Preparation of 12% tomato soup

Two set of trials were set up in the same way as in Example 1. The list of ingredients is shown here in Table 3.

**Table 3: List of ingredients**

| Ingredients | Wt % |
|---|---|
| Salt NaCl | 8.81 |
| Sugar | 15.56 |
| IMP and GMP | 1.07 |
| Citric Acid Anhydrous | 0.92 |
| Tomato powder | 12.00 |
| Oil Palm | 5.06 |
| Color red beet (powder) | 1.29 |
| Color Paprika Oleoresin | 0.22 |
| Spices (pepper, cinnamon, cumin, anis powder) | 3.35 |
| Wheat flour | 2.22 |
| Corn starch | 39.61 |
| Milk powder | 3.81 |
| Flavors | 0.2 |
| Yeast extract powder | 0.38 |
| Vegetable puree | 5.50 |

### Trial Without pre-mix:

Mix all the dry ingredients together in a lodige mixer: 18.01 kg tomato powder, 1.94 kg color powder, 13.2 kg NaCl, 23.3 kg sugar, 59.42 kg starch, 1.6 kg I+G, 1.38 kg acid, 3.33 kg wheat flour, 5.72 kg milk powder, 0.3 kg flavors, 0.57 kg yeast extract powder and 5.03 kg spice with dry mixing for 3 min.

Inject 7.59 kg palm oil (melting at 65°C firstly) and 0.33 kg color paprika oleoresin slowly into the mixer and mixing for another 1.5 min.

Add 8.25 kg of freshly milled vegetable puree, then add water amount of 4.4 kg into the mixer and mix for 4 min.

The moisture content of final wet mass was about 13.09%, then the mix was transferred to a twin head granulator for granulation.

During the granulation step a Nylon mesh was used for granulation.

Afterwards granules were dried with a fluid bed dryer and moisture content of finished product was about 6.1%, and a yield of 55% was achieved.

### Trial With pre-mix:

17.83 kg tomato powder, 1.94 kg color powder and 6 kg NaCl were added into a lodige mixer for dry mixing for 3 min.

The above cited mixture was then premixed with 5.24 kg palm oil and 0.33 kg color paprika oleoresin for 1.5 min, the palm oil having been first melted and hold at a temperature of 65°C. The achieved ratio of oil:tomato was 1:3.4. This pre-mixing step is to protect the moisture-sensitive ingredient tomato powder from moisture intake.

Thereafter, the pre-mix was further mixed with the other dry ingredients, i.e. 7.2 kg NaCl, 23.3 kg sugar, 59.42 kg starch, 1.6 kg IMP+GMP, 1.38 kg acid, 3.33 kg wheat flour, 5.72 kg milk powder, 0.3 kg flavors, 0.57 kg yeast extract powder and 5.03 kg spice dry mixing for 3 min.

Then the residual 2.35 kg palm oil (melted at 65°C) were added with continuous mixing for another 1.5 min.

Then, 8.25 kg of freshly milled vegetable puree premixed with 0.18 kg tomato powder was added and mixed in. After that water in an amount of 4.4 kg was added into the mixer with wet mixing for 4 min.

The moisture content of the final wet mass was about 13.00%. The mix was then transferred to a twin head granulator for granulation.

During the granulation step a PET mesh was used for granulation, which has good properties of excellent wear resistance and low coefficient of friction.

Afterwards granules were dried with fluid bed dryer and the moisture content of the finished product determined. It was about 6.0% and a production yield of 85% was achieved.

### Result and conclusions:

For the batch without pre-mix (150kg size), the throughput dropped very quickly, average throughput was 246 kg/h. Lump formation increased fast along with the time. Already after 20 min after start of production (82 kg dry granules were produced by then) the Nylon mesh used as sieve was broken and the apparatus was blocked. Production was stopped then and the calculated the yield for those first 20 min were at 55%.

But for the batch with the pre-mix (150kg size), the granulation throughput was stable during the whole granulation process and good quality granules were obtained. The average throughput was 281 kg/h, the yield was 85%. (Here the granulation speed was set at 25Hz). The results are summarized in Table 4.

**Table 4:**

| Mixing type | Tomato powder | Moisture of wet mass | Moisture of finished product | Yield | Throughput kg/h |
|---|---|---|---|---|---|
| without pre-mix | 12% | 13.09% | 6.10% | 55% | 246 |
| with pre-mix | 12% | 13.00% | 6.00% | 85% | 281 |

Oil content (5.06%), starch content (39.6%), salt and sugar content (24.4%) and spices content (3.35%) was identical for both examples.

## Claims

1. A process for making food granules comprising a lipid, salt, starch, a hygroscopic food material and optionally dry spices, the process comprising the steps of:
a) coating the hygroscopic food material with the lipid or part of the lipid;
b) mixing the coated hygroscopic food material with the salt, the starch and optionally the dry spices;
c) adjusting the moisture content of the mixture of step b) to a water content of 7 - 13 wt% (wet weight) by adding water and/or an aqueous composition to result in a wet mass;
d) cold extruding the wet mass through a sieve into granules at a temperature below 35°C;
e) drying the granules to a moisture content of 1 - 7 wt% (wet weight).

2. The process according to claim 1, wherein the food granules comprise 5 - 25 dry wt% of the hygroscopic food material.

3. The process according to claim 1 or 2, wherein the food granules comprise 1 - 25 dry wt% of the dry spices.

4. The process according to one of the preceding claims,
wherein the food granules comprise the lipid in relation to the hygroscopic food material in a dry weight ratio of 1:2 to 1:4.

5. The process according to one of the preceding claims,
wherein the lipid is an oil, a fat, or a combination thereof.

6. The process according to one of the preceding claims, wherein the hygroscopic food material is a plant hydrolysate, a meat hydrolysate, a yeast extract, a vegetable powder, a meat powder, or a combination thereof.

7. The process according to one of the preceding claims, wherein the food granules comprise 20 - 60 wt% (dry weight) of the starch.

8. The process according to one of the preceding claims, wherein the food granules comprise the starch in an un-gelatinized form.

9. The process according to one of the preceding claims, wherein the dry spices are added in step b) in the form of a powder.

10. The process according to one of the preceding claims, wherein the dry spices are selected from the group consisting of cumin, cinnamon, star anis, pepper, chili, turmeric, ginger, or a combination thereof.

11. The process according to one of the preceding claims, wherein step a) is carried out at a temperature of 35 - 85°C, preferably 45 - 70°C.

12. The process according to one of the preceding claims, wherein the steps b), c) and d) are carried out at a temperature of 5 - 30°C, preferably 15 - 25°C.

13. The process according to one of the preceding claims,
wherein the food granules do not comprise a binding agent which is a food gum.

14. Food granules obtainable by one of the claims 1-13.

15. The food granules of claim 14, which are a concentrated soup, a concentrated sauce, a seasoning, a food condiment, or a garnish.

## Patentansprüche

1. Verfahren zur Herstellung von Lebensmittelgranulat, umfassend ein Lipid, Salz, Stärke, ein hygroskopisches Lebensmittelmaterial und wahlweise Trockengewürze, wobei das Verfahren die Schritte umfasst:
a) Beschichten des hygroskopischen Lebensmittelmaterials mit dem Lipid oder einem Teil des Lipids;
b) Mischen des beschichteten hygroskopischen Lebensmittelmaterials mit dem Salz, der Stärke und wahlweise den Trockengewürzen;
c) Einstellen des Feuchtigkeitsgehalts der Mischung von Schritt b) auf einen Wassergehalt von 7 bis 13 Gew.-% (Nassgewicht) durch Zugeben von Wasser und/oder einer wässrigen Zusammensetzung, um eine Nassmasse zu ergeben;
d) Kaltextrudieren der Nassmasse durch ein Sieb in Granulat bei einer Temperatur von unter 35 °C;
e) Trocknen des Granulats auf einen Feuchtigkeitsgehalt von 1 bis 7 Gew.-% (Nassgewicht).

2. Verfahren nach Anspruch 1, wobei das Lebensmittelgranulat zu 5 bis 25 Trockengew.-% das hygroskopische Lebensmittelmaterial umfasst.

3. Verfahren nach Anspruch 1 oder 2, wobei das Lebensmittelgranulat zu 1 bis 25 Trockengew.-% Trockengewürze umfasst.

4. Verfahren nach einem der vorstehenden Ansprüche, wobei das Lebensmittelgranulat das Lipid in Bezug auf das hygroskopische Lebensmittelmaterial in einem Trockengewichtsverhältnis von 1:2 bis 1:4 umfasst.

5. Verfahren nach einem der vorstehenden Ansprüche, wobei das Lipid ein Öl, ein Fett oder eine Kombination davon ist.

6. Verfahren nach einem der vorstehenden Ansprüche, wobei das hygroskopische Lebensmittelmaterial ein Pflanzenhydrolysat, ein Fleischhydrolysat, ein Hefeextrakt, ein Pflanzenpulver, ein Fleischpulver oder eine Kombination davon ist.

7. Verfahren nach einem der vorstehenden Ansprüche, wobei das Lebensmittelgranulat zu 20 bis 60 Gew.-% (Trockengewicht) die Stärke umfasst.

8. Verfahren nach einem der vorstehenden Ansprüche, wobei das Lebensmittelgranulat die Stärke in einer nicht gelatinierten Form umfasst.

9. Verfahren nach einem der vorstehenden Ansprüche, wobei die Trockengewürze in Schritt b) in Form eines Pulvers zugegeben werden.

10. Verfahren nach einem der vorstehenden Ansprüche, wobei die Trockengewürze ausgewählt sind aus der Gruppe bestehend aus Kreuzkümmel, Zimt, Sternanis, Pfeffer, Chili, Kurkuma, Ingwer oder einer Kombination davon.

11. Verfahren nach einem der vorstehenden Ansprüche, wobei Schritt a) bei einer Temperatur von 35 bis 85 °C, vorzugsweise 45 bis 70 °C, durchgeführt wird.

12. Verfahren nach einem der vorstehenden Ansprüche, wobei die Schritte b), c) und d) bei einer Temperatur von 5 bis 30 °C, vorzugsweise 15 bis 25 °C, durchgeführt werden.

13. Verfahren nach einem der vorstehenden Ansprüche, wobei das Lebensmittelgranulat kein Bindemittel umfasst, das ein Lebensmittelgummi ist.

14. Lebensmittelgranulat, erhältlich nach einem der Ansprüche 1 bis 13.

15. Lebensmittelgranulat nach Anspruch 14, das eine konzentrierte Suppe, eine konzentrierte Soße, ein Würzmittel, ein Lebensmittelgewürz oder eine Garnierung sind.

## Revendications

1. Procédé de fabrication de granulés alimentaires comprenant un lipide, du sel, de l'amidon, un matériau alimentaire hygroscopique et facultativement des épices sèches, le procédé comprenant les étapes consistant à :
a) enrober le matériau alimentaire hygroscopique avec le lipide ou une partie du lipide ;
b) mélanger le matériau alimentaire hygroscopique enrobé avec le sel, l'amidon et facultativement les épices sèches ;
c) ajuster la teneur en humidité du mélange de l'étape b) à une teneur en eau de 7 à 13 % en poids (poids mouillé) en ajoutant de l'eau et/ou une composition aqueuse pour résulter en une masse mouillée ;
d) extruder à froid en granulés la masse mouillée à travers un tamis à une température inférieure à 35 °C ;
e) sécher les granulés jusqu'à une teneur en humidité de 1 à 7 % en poids (poids mouillé).

2. Procédé selon la revendication 1, dans lequel les granulés alimentaires comprennent 5 à 25 % en poids sec du matériau alimentaire hygroscopique.

3. Procédé selon la revendication 1 ou 2, dans lequel les granulés alimentaires comprennent 1 à 25 % en poids sec des épices sèches.

4. Procédé selon l'une des revendications précédentes, dans lequel les granulés alimentaires comprennent le lipide par rapport au matériau alimentaire hygroscopique dans un rapport pondéral sec de 1:2 à 1:4.

5. Procédé selon l'une des revendications précédentes, dans lequel le lipide est une huile, une graisse, ou une combinaison de celles-ci.

6. Procédé selon l'une des revendications précédentes, dans lequel le matériau alimentaire hygroscopique est un hydrolysat végétal, un hydrolysat de viande, un extrait de levure, une poudre de légumes, une poudre de viande, ou une combinaison de ceux-ci.

7. Procédé selon l'une des revendications précédentes, dans lequel les granulés alimentaires comprennent 20 à 60 % en poids (poids sec) de l'amidon.

8. Procédé selon l'une des revendications précédentes, dans lequel les granulés alimentaires comprennent l'amidon sous une forme non gélatinisée.

9. Procédé selon l'une des revendications précédentes, dans lequel les épices sèches sont ajoutées à l'étape b) sous la forme d'une poudre.

10. Procédé selon l'une des revendications précédentes, dans lequel les épices sèches sont choisies dans le groupe constitué de cumin, cannelle, anis étoilé, poivre, piment, curcuma, gingembre, ou une combinaison de ceux-ci.

11. Procédé selon l'une des revendications précédentes, dans lequel l'étape a) est effectuée à une température de 35 à 85 °C, de préférence 45 à 70 °C.

12. Procédé selon l'une des revendications précédentes, dans lequel les étapes b), c) et d) sont effectuées à une température de 5 à 30 °C, de préférence 15 à 25 °C.

13. Procédé selon l'une des revendications précédentes, dans lequel les granulés alimentaires ne comprennent pas un agent liant qui est une gomme alimentaire.

14. Granulés alimentaires pouvant être obtenus par l'une des revendications 1 à 13.

15. Granulés alimentaires selon la revendication 14, qui sont une soupe concentrée, une sauce concentrée, un assaisonnement, un condiment alimentaire, ou une garniture.
